# EUROPEAN PATENT APPLICATION

(11) **EP 4 468 784 A1**
(43) Date of publication of application: **27.11.2024**
(21) Application number: 23742902.2
(22) Date of filing: 17.01.2023
(51) Int. Cl.: H04W 28/20

(54) **METHOD FOR DETERMINING WAVEFORM ON BWP, AND TERMINAL**

(30) Priority: 18.01.2022 CN 202210056965
(71) Applicant: VIVO MOBILE COMMUNICATION CO., LTD., Dongguan, Guangdong 523863 (CN)
(72) Inventor: WU, Kai, Dongguan, Guangdong 523863 (CN); PAN, Xueming, Dongguan, Guangdong 523863 (CN); SUN, Yanliang, Dongguan, Guangdong 523863 (CN)
(74) Representative: Murgitroyd & Company
(86) International application number: PCT/CN2023/072682
(87) International publication number: WO 2023/138587

(57) **Abstract**

Embodiments of this application pertain to the field of communication technologies, and disclose a method for determining a waveform in a BWP, and a terminal. The method for determining a waveform in a BWP in the embodiments of this application includes: determining, by a terminal based on at least one of the following, a target waveform used for transmission in a target BWP after BWP switching: a waveform in a source BWP before BWP switching; indication information in DCI, where the DCI is used to instruct the terminal to perform BWP switching; a default waveform; and a waveform configured in the target BWP.

## Description

### CROSS-REFERENCE TO RELATED APPLICATION

The present invention claims priority to Chinese Patent Application No. 202210056965.7, filed on January 18, 2022, and entitled "METHOD FOR DETERMINING WAVEFORM IN BWP, AND TERMINAL", which is incorporated herein by reference in its entirety.

### TECHNICAL FIELD

This application pertains to the field of communication technologies, and specifically relates to a method for determining a waveform in a bandwidth part (Band Width Part, BWP), and a terminal.

### BACKGROUND

A terminal may configure a plurality of BWPs, and may further configure one or more waveforms in each BWP. For example, the waveforms include a cyclic prefix-orthogonal frequency division multiplexing (Cyclic Prefix-OFDM, CP-OFDM) waveform and a discrete Fourier transform-spread-orthogonal frequency division multiplexing (Discrete Fourier Transform-Spread-OFDM, DFT-S-OFDM) waveform.

The terminal may perform BWP switching based on an indication of downlink control information (Downlink Control Information, DCI) or a trigger by a timer. In the related art, because the terminal cannot determine a waveform used for transmission in a target BWP after BWP switching, the terminal and a network-side device are likely to have inconsistent understandings about the waveform, and communication performance is hence affected.

### SUMMARY

Embodiments of this application provide a method for determining a waveform in a BWP, and a terminal to resolve a problem that communication performance is affected because a terminal cannot determine a waveform used for transmission in a target BWP after BWP switching.

According to a first aspect, a method for determining a waveform in a BWP is provided and includes: determining, by a terminal based on at least one of the following, a target waveform used for transmission in a target BWP after BWP switching: a waveform in a source BWP before BWP switching; indication information in DCI, where the DCI is used to instruct the terminal to perform BWP switching; a default waveform; and a waveform configured in the target BWP.

According to a second aspect, an apparatus for determining a waveform in a BWP is provided and includes: a determining module configured to determine, based on at least one of the following, a target waveform used for transmission in a target BWP after BWP switching: a waveform in a source BWP before BWP switching; indication information in DCI, where the DCI is used to instruct the apparatus to perform BWP switching; a default waveform; and a waveform configured in the target BWP.

According to a third aspect, a terminal is provided. The terminal includes a processor and a memory. The memory has stored thereon a program or instructions capable of running on the processor. When the program or instructions are executed by the processor, the steps of the method according to the first aspect are implemented.

According to a fourth aspect, a terminal is provided and includes a processor and a communication interface. The processor is configured to determine, based on at least one of the following, a target waveform used for transmission in a target BWP after BWP switching: a waveform in a source BWP before BWP switching; indication information in DCI, where the DCI is used to instruct the terminal to perform BWP switching; a default waveform; and a waveform configured in the target BWP.

According to a fifth aspect, a system for determining a waveform in a BWP is provided and includes a terminal and a network-side device. The terminal may be configured to perform the steps of the method according to the first aspect.

According to a sixth aspect, a readable storage medium is provided. The readable storage medium has stored a program or instructions thereon. When the program or instructions are executed by a processor, the steps of the method according to the first aspect are implemented.

According to a seventh aspect, a chip is provided. The chip includes a processor and a communication interface. The communication interface is coupled to the processor. The processor is configured to run a program or instructions to implement the steps of the method according to the first aspect.

According to an eighth aspect, a computer program or program product is provided. The computer program or program product is stored in a storage medium. The computer program or program product is executed by at least one processor to implement the steps of the method according to the first aspect.

In the embodiments of this application, the terminal may determine, based on at least one of the following, the target waveform used for transmission in the target BWP after BWP switching: the waveform in the source BWP before BWP switching; the indication information in the DCI, where the DCI is used to instruct the terminal to perform BWP switching; the default waveform; and the waveform configured in the target BWP. The embodiments of this application help the terminal and the network-side device to have a consistent understanding about the waveform used for transmission, and ensure that corresponding channel transmission can be correctly decoded, thereby improving communication performance.

### BRIEF DESCRIPTION OF DRAWINGS

FIG. 1 is a schematic diagram of a wireless communication system according to an embodiment of this application;
FIG. 2 is a schematic flowchart of a method for determining a waveform in a BWP according to an embodiment of this application;
FIG. 3 is a schematic diagram of a structure of an apparatus for determining a waveform in a BWP according to an embodiment of this application;
FIG. 4 is a schematic diagram of a structure of a communication device according to an embodiment of this application; and
FIG. 5 is a schematic diagram of a structure of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

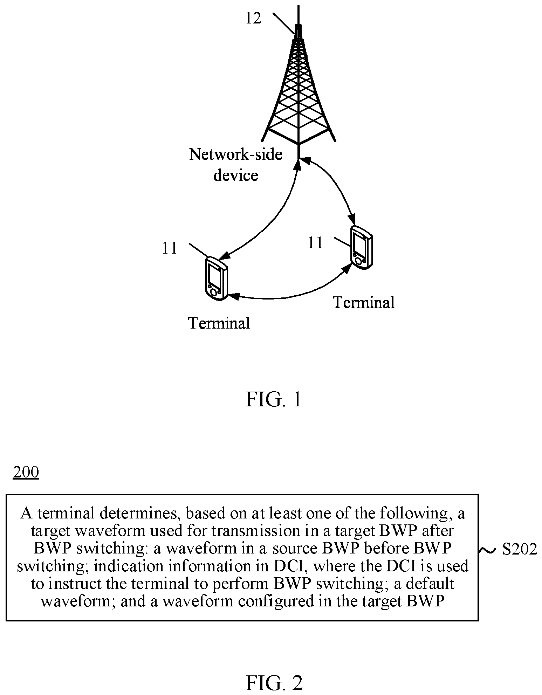

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a Wireless Fidelity (Wireless Fidelity, Wi-Fi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

A method for determining a waveform in a BWP according to the embodiments of this application is hereinafter described in detail by using specific embodiments and application scenarios thereof with reference to the accompanying drawings.

As shown in FIG. 2, an embodiment of this application provides a method 200 for determining a waveform in a BWP. The method may be performed by a terminal. In other words, the method may be performed by software or hardware installed in the terminal. The method includes the following step.

S202. A terminal determines, based on at least one of the following, a target waveform used for transmission in a target BWP after BWP switching: a waveform in a source BWP before BWP switching; indication information in downlink control information (Downlink Control Information, DCI), where the DCI is used to instruct the terminal to perform BWP switching; a default waveform; and a waveform configured in the target BWP.

This embodiment of this application may be applied to a scenario of BWP switching, where a BWP before switching may be referred to as a source BWP (source BWP), and a BWP after switching may be referred to as a target BWP (target BWP).

Before S202, the terminal may receive the DCI in the source BWP, where the DCI is used to instruct the terminal to perform BWP switching. Optionally, the DCI may further include other indication information, for example, include a waveform switching indication, where the waveform switching indication is used to instruct the terminal to perform waveform switching; or for another example, include indication information for indicating an index of the target waveform.

After S202, the terminal may perform transmission in the target BWP by using the determined target waveform, where the transmission includes, for example, physical uplink shared channel (Physical Uplink Shared Channel, PUSCH) transmission or physical downlink shared channel (Physical Downlink Shared Channel, PDSCH) transmission.

Optionally, the target waveform mentioned in each embodiment of this application includes a waveform for PUSCH transmission or a waveform for PDSCH transmission.

Optionally, the PUSCH transmission or the PDSCH transmission includes at least one of the following: transmission in at least one serving cell; and transmission on at least one of a plurality of configured TRPs.

In S202, the terminal may determine the target waveform based on one or more of four types of information. For example, the terminal determines a waveform configured or indicated in the source BWP as the target waveform. For another example, the terminal determines a waveform indicated by the indication information in the DCI as the target waveform. For another example, the terminal determines the default waveform as the target waveform. For another example, the terminal determines one of waveforms configured in the target BWP (such as one with a smallest index) as the target waveform. The following illustrates how the terminal determines the target waveform based on a variety of information.

In an example, the terminal determines the target waveform based on the indication information in the DCI and the default waveform. For example, in a case that the indication information in the DCI is a waveform switching indication, where the waveform switching indication is used to instruct the terminal to perform waveform switching, the terminal determines the default waveform as the target waveform.

In an example, the terminal determines the target waveform based on the indication information in the DCI and the waveform configured in the target BWP. For example, the indication information in the DCI is used to indicate the index of the target waveform, and the target waveform determined by the terminal is a waveform corresponding to the index among the waveforms configured in the target BWP.

Optionally, the target waveform mentioned in each embodiment of this application may include at least one of the following:
(1) a cyclic prefix-orthogonal frequency division multiplexing (Cyclic Prefix-OFDM, CP-OFDM) waveform;
(2) a discrete Fourier transform-spread-orthogonal frequency division multiplexing (Discrete Fourier Transform-Spread-OFDM, DFT-S-OFDM) waveform;
(3) a CP-OFDM waveform in frequency domain spectrum shaping without spectrum extension (frequency domain spectrum shaping without spectrum extension), where
   in this embodiment, by relaxing a radiation metric, maximum power reduction (Maximum Power Reduction, MPR) may be reduced and total transmit power may be increased;
(4) a DFT-S-OFDM waveform in frequency domain spectrum shaping without spectrum extension, where
   in this embodiment, by relaxing a radiation metric, MPR may be reduced and total transmit power may be increased;
(5) a CP-OFDM waveform in frequency domain spectrum shaping with spectrum extension (frequency domain spectrum shaping with spectrum extension), where
   in this embodiment, a part of frequency domain resources of the CP-OFDM waveform may be copied to other frequency domain resources, to reduce MPR and increase total transmit power; and
(6) a DFT-S-OFDM waveform in frequency domain spectrum shaping with spectrum extension, where
   in this embodiment, a part of frequency domain resources of the DFT-S-OFDM waveform may be copied to other frequency domain resources, to reduce MPR and increase total transmit power.

The foregoing (3) and (5) are optimized on a basis of the CP-OFDM waveform to help reduce the MPR and increase the transmit power. The foregoing (4) and (6) are optimized on a basis of the DFT-S-OFDM waveform to help reduce the MPR and increase the transmit power.

It should be noted that in each embodiment of this application, the CP-OFDM waveform may also be referred to as transform precoder (Transform Precoder) disabled; and the DFT-S-OFDM waveform may also be referred to as transform precoder enabled.

In the method for determining a waveform in a BWP according to this embodiment of this application, the terminal may determine, based on at least one of the following, the target waveform used for transmission in the target BWP after BWP switching: the waveform in the source BWP before BWP switching; the indication information in the DCI, where the DCI is used to instruct the terminal to perform BWP switching; the default waveform; and the waveform configured in the target BWP. This embodiment of this application helps the terminal and a network-side device to have a consistent understanding about the waveform used for transmission, and ensures that corresponding channel transmission can be correctly decoded, thereby improving communication performance.

As mentioned in the method 200, the terminal may determine the target waveform based on at least one of the following four types of information: (1) the waveform in the source BWP before BWP switching; (2) the indication information in the DCI; (3) the default waveform; and (4) the waveform configured in the target BWP. Details are hereinafter described by using a plurality of embodiments.

In an embodiment, the terminal determines the target waveform based on the waveform in the source BWP before BWP switching or the indication information in the DCI, where the target waveform includes at least one of the following: a waveform configured in the source BWP before BWP switching; and a waveform indicated in the source BWP before BWP switching.

This embodiment may further include the following step: The terminal performs transmission in the target BWP by using the target waveform in a first time period.

Optionally, duration of the first time period is related to a capability of the terminal. For example, the duration of the first time period is inversely related to the capability of the terminal, that is, the higher the capability of the terminal, the shorter the duration of the first time period; or the lower the capability of the terminal, the longer the duration of the first time period.

In this embodiment, a start time of the first time period may be a time when the terminal receives the DCI. The higher the capability of the terminal, the shorter the duration required for BWP switching, transmission scheduled by the DCI can be completed as soon as possible, and therefore, the duration of the first time period can be set to be shorter. Conversely, the lower the capability of the terminal, the longer the duration required for BWP switching, a longer time may be required to complete transmission scheduled by the DCI, and therefore, the duration of the first time period can be set to be longer, to ensure completion of the transmission scheduled by the DCI and improve communication performance.

In an embodiment, the terminal determines the target waveform based on the indication information in the DCI, where the indication information is used to indicate the index of the target waveform.

In this embodiment, an index of the waveform in the target BWP is predefined, or configured by a network-side device by using radio resource control (Radio Resource Control, RRC) signaling.

In this embodiment, the DCI in the source BWP indicates the index of the waveform in the target BWP, and the terminal performs transmission in the target BWP by using the waveform corresponding to the index. Optionally, an index of a waveform in each BWP is predefined, or configured by using RRC signaling.

In an embodiment, the terminal determines the target waveform based on the indication information in the DCI and/or the default waveform, and before S202, the method further includes: the terminal receives the DCI, where the DCI is used to instruct the terminal to perform BWP switching, and the DCI includes a waveform switching indication; and the terminal performs transmission in the target BWP by using the default waveform. In this embodiment, the terminal may further ignore the waveform switching indication.

In an embodiment, the terminal determines the target waveform based on the default waveform, and before S202, the method further includes: the terminal receives the DCI, where the DCI is used to instruct the terminal to perform BWP switching, and the DCI does not include a waveform switching indication; and the terminal performs transmission in the target BWP by using the default waveform.

In this embodiment, for example, the DCI for indicating BWP switching is not allowed to include the waveform switching indication, or even if the DCI includes the waveform switching indication, the waveform switching indication is ignored by the terminal.

The default waveform mentioned in each embodiment of this application includes at least one of the following: a predefined waveform, a waveform configured by higher layer signaling, a waveform corresponding to a specific code point configured by higher layer signaling, a waveform corresponding to a specific index value configured by higher layer signaling, a waveform activated by a media access control control element (Media Access Control Control Element, MAC CE), a waveform for transmitting a third random access message (Msg3), a waveform for transmitting a system information block (System Information Block, SIB), a waveform for transmitting a random access response (RACH (Random Access Channel) Access Response, RAR), and a waveform for transmitting a paging (paging) message.

For another example, a waveform with an index value of 0 is the default waveform. A waveform corresponding to a first code point (code point) 0 or 00 in the DCI is the default waveform.

In an embodiment, the terminal determines the target waveform based on the waveform configured in the target BWP, where a network-side device configures a waveform corresponding to a first code point for each BWP, and the first code point is included in an information field used to indicate the waveform in the DCI.

In an embodiment, before the terminal determines the target waveform used for transmission in the target BWP after BWP switching, the method further includes: the terminal receives the DCI, where the DCI is used to instruct the terminal to perform BWP switching, where the DCI includes a waveform switching indication, and the waveform switching indication is used to instruct the terminal to perform waveform switching.

In this embodiment, a reference waveform for performing waveform switching by the terminal includes at least one of the following: a waveform configured in the source BWP before BWP switching, the waveform configured in the target BWP, a waveform configured by an Msg3, a waveform for transmitting a SIB, a waveform for transmitting a RAR, and a waveform for transmitting a paging message.

In this embodiment, the DCI indicates a switching behavior, and not a waveform itself. The switching behavior is switching with respect to the reference waveform. In this embodiment, for example, the reference waveform is CP-OFDM, and if the waveform switching indication instructs the terminal to perform waveform switching, the target waveform after switching is DFT-S-OFDM; or if the waveform switching indication instructs the terminal not to perform waveform switching, the target waveform after switching is CP-OFDM.

In this embodiment, the method further includes: the terminal ignores the waveform switching indication.

In an embodiment, a plurality of BWPs configured by the terminal all support dynamic waveform switching or none support dynamic waveform switching.

In this embodiment, for example, whether dynamic waveform switching (Dynamic waveform switching, DWS) is supported is configured per terminal (per UE (User Equipment)), that is, all BWPs configured by the terminal all support DWS or none support DWS.

The method for determining a waveform in a BWP according to this embodiment of this application is hereinafter described in detail with reference to several specific embodiments.

In this embodiment, quantities of waveforms configured in different BWPs may be different. For example, only one waveform for transmission is configured in a second BWP (source BWP), and a plurality of waveforms are configured in a first BWP (target BWP) to support waveform switching. In this case, the DCI in the second BWP does not include the indication information indicating waveform switching, but DCI in the first BWP includes the indication information. In other words, the second BWP may be configured not to allow waveform switching, and only one waveform is used for transmission, while the first BWP is configured to allow waveform switching and more than one waveform may be used for transmission.

This embodiment can resolve the following problems: (1) If the terminal switches from the second BWP to the first BWP, how to determine the waveform in the first BWP, because the second BWP does not include waveform indication information. (2) If the waveform in the first BWP is a waveform not configured in the second BWP, how to determine the waveform after the terminal switches from the second BWP to the first BWP; and how to determine the waveform after the terminal switches from the first BWP to the second BWP. (3) When both the second BWP and the first BWP are configured with a plurality of waveforms, or both are configured to enable waveform switching, if the DCI triggering BWP switching also indicates waveform switching, it is necessary to determine whether the reference waveform for such waveform switching is the waveform currently configured in the second BWP or the waveform in the first BWP, to avoid PUSCH channel decoding failure caused by different waveform understandings between the network and the terminal.

In this embodiment, when scheduling the PDSCH and/or the PUSCH, the scheduling DCI received by the terminal indicates BWP switching.

It is assumed that only one waveform (first waveform) for transmission is configured in the second BWP, but a plurality of waveforms are configured in the first BWP to support waveform switching {first waveform and second waveform}.

If the scheduling DCI sent in the second BWP by the network instructs the terminal to switch to the first BWP, the scheduled PDSCH or PUSCH is transmitted in the first BWP by using the waveform configured in the second BWP. Optionally, the waveform in the second BWP is used for transmission in a time period T1; and the time period T1 depends on the terminal capability.

Optionally, the terminal uses a default transmission waveform of the first BWP for transmission, where the default transmission waveform is a predefined waveform, or a waveform configured by higher layer signaling, or a waveform corresponding to a specific code point configured by higher layer signaling, or a waveform corresponding to a specific index value configured by higher layer signaling, or a waveform activated by a MAC CE, or a waveform for transmitting an Msg3 (for PUSCH), or a waveform for transmitting a SIB/RAR/paging (for PDSCH).

Optionally, the terminal still completes the transmission in the second BWP, and switches to the first BWP after completing the transmission.

If the scheduling DCI sent in the first BWP by the network instructs the terminal to switch to the second BWP, the scheduled PDSCH or PUSCH is transmitted in the second BWP by using the waveform indicated by the scheduling DCI in the first BWP; and preferably, the network needs to ensure that the waveform indicated by the DCI in the first BWP is a waveform configured in the second BWP.

Optionally, the network configures the index of the waveform in each BWP, the index of the waveform indicated by the scheduling DCI is the index of the waveform in the target BWP, and the terminal performs transmission based on the index of the waveform in the target BWP. For example, the source BWP is configured with an index 0 corresponding to the first waveform and an index 1 corresponding to the second waveform; the target BWP is configured with an index 0 corresponding to a third waveform and an index 1 corresponding to a fourth waveform; and if the scheduling DCI indicating BWP switching indicates that the index of the waveform is the index 1, the terminal uses the fourth waveform to perform transmission in the target BWP.

Optionally, if a BWP is configured with a plurality of waveforms, or waveform switching is enabled, the network may configure a waveform corresponding to a code point indicating waveform information in the scheduling DCI of the BWP. For example, the network may configure the code point 0 or 00 in the indication information to correspond to the second waveform, and 1 or 01 to correspond to the first waveform. If the terminal receives the scheduling DCI and is instructed to switch from the source BWP to the target BWP, the terminal uses a waveform corresponding to a specific code point such as 0 or 00 for transmission by default.

When both the source BWP and the target BWP are configured with a plurality of waveforms, or both are configured to enable waveform switching, if the DCI triggering BWP switching also indicates waveform switching, it is necessary to determine whether the reference waveform for such waveform switching is the waveform configured in the source BWP or the waveform in the target BWP, to avoid PUSCH channel decoding failure caused by different waveform understandings between the network and the terminal.

The reference waveform for dynamic waveform switching in the DCI for BWP switching may be at least one of the following: the waveform configured in the source BWP before BWP switching, the waveform configured in the target BWP, the waveform configured by the Msg3, the waveform for transmitting the SIB, the waveform for transmitting the RAR, and the waveform for transmitting the paging message.

In this method, the DCI indicates a switching action instead of a specific waveform, and instructs the terminal to perform switching with respect to the reference waveform. For example, the reference waveform is the first waveform, and if 0 is indicated in the DCI for BWP switching, waveform switching is not performed, that is, the first waveform is used for transmission in the target BWP; or if 1 is indicated in the DCI for BWP switching, the second waveform is used for transmission.

In addition, to avoid a conflict between dynamic waveform switching and dynamic BWP switching, one method proposed in this embodiment of this application is: dynamic waveform switching is not allowed to be indicated in the DCI for BWP switching, or dynamic waveform switching is ignored by the terminal even if it is indicated. For example, in this case, the waveform used by the PUSCH scheduled by the DCI for BWP switching is the waveform configured in the target BWP. Another method is: whether dynamic waveform switching (DWS) is supported is configured per UE, that is, all the BWPs support DWS or none support DWS.

The method for determining a waveform in a BWP according to this embodiment of this application may be performed by an apparatus for determining a waveform in a BWP. An apparatus for determining a waveform in a BWP according to an embodiment of this application is described by assuming that the method for determining a waveform in a BWP in this embodiment of this application is performed by the apparatus for determining a waveform in a BWP.

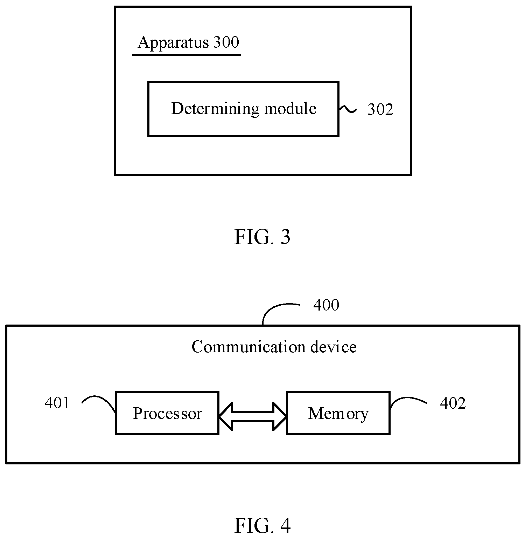

FIG. 3 is a schematic diagram of a structure of an apparatus for determining a waveform in a BWP according to an embodiment of this application. The apparatus may correspond to a terminal in another embodiment. As shown in FIG. 3, the apparatus 300 includes the following module:
a determining module 302, which may be configured to determine, based on at least one of the following, a target waveform used for transmission in a target BWP after BWP switching: a waveform in a source BWP before BWP switching; indication information in DCI, where the DCI is used to instruct the apparatus to perform BWP switching; a default waveform; and a waveform configured in the target BWP.

Optionally, the apparatus 300 may further include a transmission module.

The apparatus for determining a waveform in a BWP according to this embodiment of this application may determine, based on at least one of the following, the target waveform used for transmission in the target BWP after BWP switching: the waveform in the source BWP before BWP switching; the indication information in the DCI, where the DCI is used to instruct the apparatus to perform BWP switching; the default waveform; and the waveform configured in the target BWP. This embodiment of this application helps the apparatus and a network-side device to have a consistent understanding about the waveform used for transmission, and ensures that corresponding channel transmission can be correctly decoded, thereby improving communication performance.

Optionally, in an embodiment, the target waveform includes at least one of the following: (1) a CP-OFDM waveform; (2) a DFT-S-OFDM waveform; (3) a CP-OFDM waveform in frequency domain spectrum shaping without spectrum extension; (4) a DFT-S-OFDM waveform in frequency domain spectrum shaping without spectrum extension; (5) a CP-OFDM waveform in frequency domain spectrum shaping with spectrum extension; and (6) a DFT-S-OFDM waveform in frequency domain spectrum shaping with spectrum extension.

Optionally, in an embodiment, the determining module 302 is configured to determine the target waveform based on the waveform in the source BWP before BWP switching or the indication information in the DCI, where the target waveform includes at least one of the following: (1) a waveform configured in the source BWP before BWP switching; and (2) a waveform indicated in the source BWP before BWP switching.

Optionally, in an embodiment, the apparatus further includes a transmission module configured to perform transmission in the target BWP by using the target waveform in a first time period.

Optionally, in an embodiment, duration of the first time period is related to a capability of the apparatus.

Optionally, in an embodiment, the determining module 302 is configured to determine the target waveform based on the indication information in the DCI, where the indication information is used to indicate an index of the target waveform.

Optionally, in an embodiment, an index of the waveform in the target BWP is predefined, or configured by a network-side device by using RRC signaling.

Optionally, in an embodiment, the determining module 302 is configured to determine the target waveform based on the indication information in the DCI and/or the default waveform, and the apparatus further includes a transmission module configured to: receive the DCI, where the DCI is used to instruct the apparatus to perform BWP switching, and the DCI includes a waveform switching indication; and perform transmission in the target BWP by using the default waveform.

Optionally, in an embodiment, the determining module 302 is configured to determine the target waveform based on the default waveform, and the apparatus further includes a transmission module configured to: receive the DCI, where the DCI is used to instruct the apparatus to perform BWP switching, and the DCI does not include a waveform switching indication; and perform transmission in the target BWP by using the default waveform.

Optionally, in an embodiment, the default waveform includes at least one of the following: a predefined waveform, a waveform configured by higher layer signaling, a waveform corresponding to a specific code point configured by higher layer signaling, a waveform corresponding to a specific index value configured by higher layer signaling, a waveform activated by a MAC CE, a waveform for transmitting an Msg3, a waveform for transmitting a SIB, a waveform for transmitting a RAR, and a waveform for transmitting a paging message.

Optionally, in an embodiment, the determining module 302 is configured to determine the target waveform based on the waveform configured in the target BWP, where a network-side device configures a waveform corresponding to a first code point for each BWP, and the first code point is included in an information field used to indicate the waveform in the DCI.

Optionally, in an embodiment, the apparatus further includes a transmission module configured to receive the DCI, where the DCI is used to instruct the apparatus to perform BWP switching, where the DCI includes a waveform switching indication, and the waveform switching indication is used to instruct the apparatus to perform waveform switching.

Optionally, in an embodiment, a reference waveform for performing waveform switching by the apparatus includes at least one of the following: a waveform configured in the source BWP before BWP switching, the waveform configured in the target BWP, a waveform configured by an Msg3, a waveform for transmitting a SIB, a waveform for transmitting a RAR, and a waveform for transmitting a paging message.

Optionally, in an embodiment, the determining module 302 is further configured to ignore the waveform switching indication.

Optionally, in an embodiment, a plurality of BWPs configured by the apparatus all support dynamic waveform switching or none support dynamic waveform switching.

Optionally, in an embodiment, the target waveform includes a waveform for PUSCH transmission or a waveform for PDSCH transmission.

Optionally, in an embodiment, the PUSCH transmission or the PDSCH transmission includes at least one of the following: transmission in at least one serving cell; and transmission on at least one of a plurality of configured TRPs.

For the apparatus 300 in this embodiment of this application, refer to the processes of the method 200 in the corresponding embodiment of this application. In addition, the units/modules of the apparatus 300 and other operations and/or functions described above are used to implement the corresponding processes of the method 200, with the same or equivalent technical effect achieved. For brevity, details are not described herein again.

The apparatus for determining a waveform in a BWP in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

Optionally, as shown in FIG. 4, an embodiment of this application further provides a communication device 400, including a processor 401 and a memory 402, where the memory 402 has stored thereon a program or instructions capable of running on the processor 401. For example, when the communication device 400 is a terminal, and the program or instructions are executed by the processor 401, the steps of the foregoing embodiment of the method for determining a waveform in a BWP are implemented, with the same technical effect achieved. To avoid repetition, details are not described herein again.

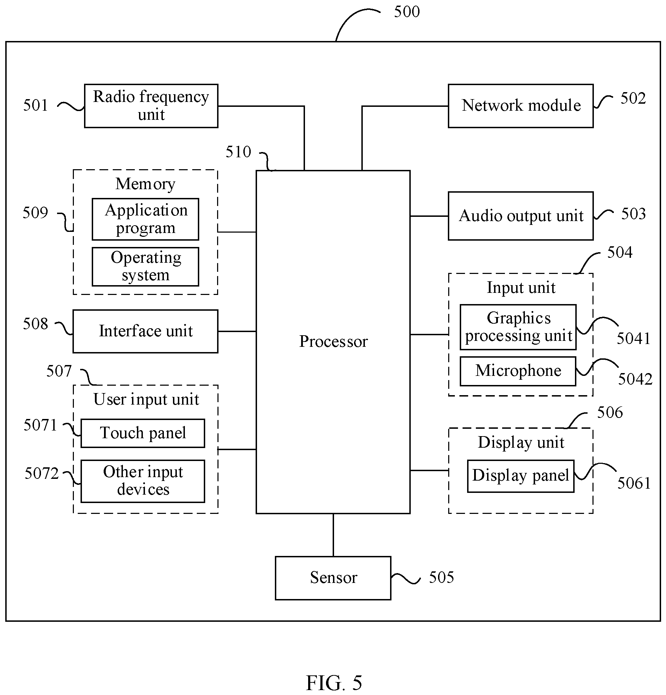

An embodiment of this application further provides a terminal, including a processor and a communication interface. The processor is configured to determine, based on at least one of the following, a target waveform used for transmission in a target BWP after BWP switching: a waveform in a source BWP before BWP switching; indication information in DCI, where the DCI is used to instruct the terminal to perform BWP switching; a default waveform; and a waveform configured in the target BWP. The terminal embodiment corresponds to the foregoing terminal-side method embodiment, and each implementation process and implementation of the foregoing method embodiment can be applied to the terminal embodiment, with the same technical effect achieved. Specifically, FIG. 5 is a schematic diagram of a hardware structure of a terminal for implementing an embodiment of this application.

The terminal 500 includes but is not limited to at least some components such as a radio frequency unit 501, a network module 502, an audio output unit 503, an input unit 504, a sensor 505, a display unit 506, a user input unit 507, an interface unit 508, a memory 509, and a processor 510.

A person skilled in the art may understand that the terminal 500 may further include a power supply (for example, a battery) supplying power to all components. The power supply may be logically connected to the processor 510 through a power management system. In this way, functions such as charge management, discharge management, and power consumption management are implemented by using the power management system. The terminal structure shown in FIG. 5 does not constitute a limitation on the terminal. The terminal may include more or fewer components than those shown in the figure, or some components are combined, or component arrangements are different. Details are not described herein again.

It should be understood that, in this embodiment of this application, the input unit 504 may include a graphics processing unit (Graphics Processing Unit, GPU) 5041 and a microphone 5042. The graphics processing unit 5041 processes image data of a still picture or video obtained by an image capture apparatus (such as a camera) in a video capture mode or an image capture mode. The display unit 506 may include a display panel 5061, and the display panel 5061 may be configured in a form of a liquid crystal display, an organic light-emitting diode, or the like. The user input unit 507 includes at least one of a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 501 may transmit the downlink data to the processor 510 for processing. In addition, the radio frequency unit 501 may send uplink data to the network-side device. Usually, the radio frequency unit 501 includes but is not limited to an antenna, an amplifier, a transceiver, a coupler, a low noise amplifier, a duplexer, and the like.

The memory 509 may be configured to store software programs or instructions and various data. The memory 509 may primarily include a first storage area for storing programs or instructions and a second storage area for storing data. The first storage area may store an operating system, an application program or instructions required by at least one function (such as an audio play function and an image play function), and the like. In addition, the memory 509 may include a volatile memory or a non-volatile memory, or the memory 509 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 509 in this embodiment of this application includes but is not limited to these and any other suitable types of memories.

The processor 510 may include one or more processing units. Optionally, the processor 510 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively not be integrated in the processor 510.

The processor 510 may be configured to determine, based on at least one of the following, a target waveform used for transmission in a target BWP after BWP switching: a waveform in a source BWP before BWP switching; indication information in DCI, where the DCI is used to instruct the terminal to perform BWP switching; a default waveform; and a waveform configured in the target BWP.

The terminal provided in this embodiment of this application may determine, based on at least one of the following, the target waveform used for transmission in the target BWP after BWP switching: the waveform in the source BWP before BWP switching; the indication information in the DCI, where the DCI is used to instruct the terminal to perform BWP switching; the default waveform; and the waveform configured in the target BWP. This embodiment of this application helps the terminal and the network-side device to have a consistent understanding about the waveform used for transmission, and ensures that corresponding channel transmission can be correctly decoded, thereby improving communication performance.

The terminal 500 provided in this embodiment of this application can further implement each process of the foregoing embodiment of the method for determining a waveform in a BWP, with the same technical effect achieved. To avoid repetition, details are not described herein again.

An embodiment of this application further provides a readable storage medium. The readable storage medium has stored a program or instructions thereon. When the program or instructions are executed by a processor, each process of the foregoing embodiment of the method for determining a waveform in a BWP is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip, where the chip includes a processor and a communication interface, the communication interface is coupled to the processor, and the processor is configured to run a program or instructions to implement each process of the foregoing embodiment of the method for determining a waveform in a BWP, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the method for determining a waveform in a BWP, with the same technical effect achieved. To avoid repetition, details are not described herein again.

An embodiment of this application further provides a system for determining a waveform in a BWP. The system includes a terminal and a network-side device. The terminal may be configured to perform the steps of the foregoing method for determining a waveform in a BWP.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A method for determining a waveform in a bandwidth part BWP, comprising:
determining, by a terminal based on at least one of the following, a target waveform used for transmission in a target BWP after BWP switching:
a waveform in a source BWP before BWP switching;
indication information in downlink control information DCI, wherein the DCI is used to instruct the terminal to perform BWP switching;
a default waveform; and
a waveform configured in the target BWP.

2. The method according to claim 1, wherein the target waveform comprises at least one of the following:
a cyclic prefix-orthogonal frequency division multiplexing CP-OFDM waveform;
a discrete Fourier transform-spread-orthogonal frequency division multiplexing DFT-S-OFDM waveform;
a CP-OFDM waveform in frequency domain spectrum shaping without spectrum extension;
a DFT-S-OFDM waveform in frequency domain spectrum shaping without spectrum extension;
a CP-OFDM waveform in frequency domain spectrum shaping with spectrum extension; and
a DFT-S-OFDM waveform in frequency domain spectrum shaping with spectrum extension.

3. The method according to claim 1, wherein the terminal determines the target waveform based on the waveform in the source BWP before BWP switching or the indication information in the DCI, wherein the target waveform comprises at least one of the following:
a waveform configured in the source BWP before BWP switching; and
a waveform indicated in the source BWP before BWP switching.

4. The method according to claim 3, wherein the method further comprises:
performing, by the terminal, transmission in the target BWP by using the target waveform in a first time period.

5. The method according to claim 4, wherein duration of the first time period is related to a capability of the terminal.

6. The method according to claim 1, wherein the terminal determines the target waveform based on the indication information in the DCI, wherein
the indication information is used to indicate an index of the target waveform.

7. The method according to claim 6, wherein an index of the waveform in the target BWP is predefined, or configured by a network-side device by using RRC signaling.

8. The method according to claim 1 or 6, wherein the terminal determines the target waveform based on the indication information in the DCI and/or the default waveform, and the method further comprises:
receiving, by the terminal, the DCI, wherein the DCI is used to instruct the terminal to perform BWP switching, and the DCI comprises a waveform switching indication; and
performing, by the terminal, transmission in the target BWP by using the default waveform.

9. The method according to claim 1, wherein the terminal determines the target waveform based on the default waveform, and the method further comprises:
receiving, by the terminal, the DCI, wherein the DCI is used to instruct the terminal to perform BWP switching, and the DCI does not comprise a waveform switching indication; and
performing, by the terminal, transmission in the target BWP by using the default waveform.

10. The method according to claim 1, 8, or 9, wherein the default waveform comprises at least one of the following: a predefined waveform, a waveform configured by higher layer signaling, a waveform corresponding to a specific code point configured by higher layer signaling, a waveform corresponding to a specific index value configured by higher layer signaling, a waveform activated by a media access control control element MAC CE, a waveform for transmitting a third random access message Msg3, a waveform for transmitting a system information block SIB, a waveform for transmitting a random access response RAR, and a waveform for transmitting a paging (paging) message.

11. The method according to claim 1, wherein the terminal determines the target waveform based on the waveform configured in the target BWP, wherein
a network-side device configures a waveform corresponding to a first code point for each BWP, and the first code point is comprised in an information field used to indicate the waveform in the DCI.

12. The method according to claim 1, wherein before the determining, by a terminal, a target waveform used for transmission in a target BWP after BWP switching, the method further comprises:
receiving, by the terminal, the DCI, wherein the DCI is used to instruct the terminal to perform BWP switching, wherein
the DCI comprises a waveform switching indication, and the waveform switching indication is used to instruct the terminal to perform waveform switching.

13. The method according to claim 12, wherein a reference waveform for performing waveform switching by the terminal comprises at least one of the following: a waveform configured in the source BWP before BWP switching, the waveform configured in the target BWP, a waveform configured by an Msg3, a waveform for transmitting a SIB, a waveform for transmitting a RAR, and a waveform for transmitting a paging message.

14. The method according to claim 12, wherein the method further comprises:
ignoring, by the terminal, the waveform switching indication.

15. The method according to claim 1, wherein a plurality of BWPs configured by the terminal all support dynamic waveform switching or none support dynamic waveform switching.

16. The method according to claim 1, wherein the target waveform comprises a waveform for physical uplink shared channel PUSCH transmission or a waveform for physical downlink shared channel PDSCH transmission.

17. The method according to claim 16, wherein the PUSCH transmission or the PDSCH transmission comprises at least one of the following:
transmission in at least one serving cell; and transmission on at least one of a plurality of configured transmission and reception points TRPs.

18. An apparatus for determining a waveform in a BWP, comprising:
a determining module configured to determine, based on at least one of the following, a target waveform used for transmission in a target BWP after BWP switching:
a waveform in a source BWP before BWP switching;
indication information in DCI, wherein the DCI is used to instruct the apparatus to perform BWP switching;
a default waveform; and
a waveform configured in the target BWP.

19. The apparatus according to claim 18, wherein the target waveform comprises at least one of the following:
a CP-OFDM waveform;
a DFT-S-OFDM waveform;
a CP-OFDM waveform in frequency domain spectrum shaping without spectrum extension;
a DFT-S-OFDM waveform in frequency domain spectrum shaping without spectrum extension;
a CP-OFDM waveform in frequency domain spectrum shaping with spectrum extension; and
a DFT-S-OFDM waveform in frequency domain spectrum shaping with spectrum extension.

20. The apparatus according to claim 18, wherein the determining module is configured to determine the target waveform based on the waveform in the source BWP before BWP switching or the indication information in the DCI, wherein the target waveform comprises at least one of the following:
a waveform configured in the source BWP before BWP switching; and
a waveform indicated in the source BWP before BWP switching.

21. The apparatus according to claim 20, wherein the apparatus further comprises a transmission module configured to perform transmission in the target BWP by using the target waveform in a first time period.

22. The apparatus according to claim 21, wherein duration of the first time period is related to a capability of the apparatus.

23. The apparatus according to claim 18, wherein the determining module is configured to determine the target waveform based on the indication information in the DCI, wherein
the indication information is used to indicate an index of the target waveform.

24. The apparatus according to claim 23, wherein an index of the waveform in the target BWP is predefined, or configured by a network-side device by using RRC signaling.

25. The apparatus according to claim 18 or 23, wherein the determining module is configured to determine the target waveform based on the indication information in the DCI and/or the default waveform, and the apparatus further comprises a transmission module configured to:
receive the DCI, wherein the DCI is used to instruct the apparatus to perform BWP switching, and the DCI comprises a waveform switching indication; and
perform transmission in the target BWP by using the default waveform.

26. The apparatus according to claim 18, wherein the determining module is configured to determine the target waveform based on the default waveform, and the apparatus further comprises a transmission module configured to:
receive the DCI, wherein the DCI is used to instruct the apparatus to perform BWP switching, and the DCI does not comprise a waveform switching indication; and
perform transmission in the target BWP by using the default waveform.

27. The apparatus according to claim 18, 25, or 26, wherein the default waveform comprises at least one of the following: a predefined waveform, a waveform configured by higher layer signaling, a waveform corresponding to a specific code point configured by higher layer signaling, a waveform corresponding to a specific index value configured by higher layer signaling, a waveform activated by a MAC CE, a waveform for transmitting an Msg3, a waveform for transmitting a SIB, a waveform for transmitting a RAR, and a waveform for transmitting a paging message.

28. The apparatus according to claim 18, wherein the determining module is configured to determine the target waveform based on the waveform configured in the target BWP, wherein
a network-side device configures a waveform corresponding to a first code point for each BWP, and the first code point is comprised in an information field used to indicate the waveform in the DCI.

29. The apparatus according to claim 18, wherein the apparatus further comprises a transmission module configured to receive the DCI, wherein the DCI is used to instruct the apparatus to perform BWP switching, wherein
the DCI comprises a waveform switching indication, and the waveform switching indication is used to instruct the apparatus to perform waveform switching.

30. The apparatus according to claim 29, wherein a reference waveform for performing waveform switching by the apparatus comprises at least one of the following: a waveform configured in the source BWP before BWP switching, the waveform configured in the target BWP, a waveform configured by an Msg3, a waveform for transmitting a SIB, a waveform for transmitting a RAR, and a waveform for transmitting a paging message.

31. The apparatus according to claim 29, wherein the determining module is further configured to ignore the waveform switching indication.

32. The apparatus according to claim 18, wherein a plurality of BWPs configured by the apparatus all support dynamic waveform switching or none support dynamic waveform switching.

33. The apparatus according to claim 18, wherein the target waveform comprises a waveform for PUSCH transmission or a waveform for PDSCH transmission.

34. The apparatus according to claim 33, wherein the PUSCH transmission or the PDSCH transmission comprises at least one of the following:
transmission in at least one serving cell; and transmission on at least one of a plurality of configured TRPs.

35. A terminal comprising a processor and a memory, wherein the memory has stored thereon a program or instructions capable of running on the processor, and when the program or instructions are executed by the processor, the steps of the method for determining a waveform in a BWP according to any one of claims 1 to 17 are implemented.

36. A readable storage medium, wherein the readable storage medium has stored a program or instructions thereon, and when the program or instructions are executed by a processor, the steps of the method for determining a waveform in a BWP according to any one of claims 1 to 17 are implemented.
